# EUROPÄISCHE PATENTANMELDUNG

(11) **EP 1 832 704 A2**
(43) Veröffentlichungstag der Anmeldung: **12.09.2007**
(21) Anmeldenummer: 07004262.7
(22) Anmeldetag: 01.03.2007
(51) Int. Cl.: E05F 15/14, E05F 11/42, E05F 11/52, E05F 11/53, E05F 15/16, F16H 55/17, F16H 55/26

(54) **Antrieb für ein Kraftfahrzeug-Schiebefenster**

(30) Priorität: 09.03.2006 DE 102006011026; 08.06.2006 DE 102006026754
(71) Anmelder: DURA Automotive Body & Glass Systems GmbH, 58840 Plettenberg (DE)
(72) Erfinder: Krüsemann, Bernard, 45657 Recklinghausen (DE); Vornbäumen, Jens, 58762 Altena (DE)
(74) Vertreter: Zinnecker, Armin

(57) **Zusammenfassung**

Ein Antrieb für ein Schiebefenster, eine Schiebetür oder einen Fensterheber für ein Fahrzeug, insbesondere für ein Kraftfahrzeug, umfaßt ein Zahnrad (3) und eine Zahnstange (2). Um einen derartigen Antrieb zu verbessern weist ein Teilbereich des Zahnrades (3) und/oder der Zahnstange (2) eine Verstärkung (24) auf (Fig. 3).

## Beschreibung

Die Erfindung betrifft einen Antrieb für ein Schiebefenster, eine Schiebetür oder einen Fensterheber für ein Fahrzeug, insbesondere für ein Kraftfahrzeug. Die Erfindung betrifft ferner ein Schiebefenster, eine Schiebetüre oder ein bewegliches Fenster für ein Fahrzeug, insbesondere ein Kraftfahrzeug. Die Erfindung betrifft schließlich ein Fahrzeug, insbesondere Kraftfahrzeug, mit einem Schiebefenster, einer Schiebetüre und/oder einem beweglichen Fenster.

In der der prioritätsälteren, nicht vorveröffentlichten europäischen Patentanmeldung Nr. 05 021 302.4 ist ein Schiebefenster für ein Kraftfahrzeug beschrieben. Das Schiebefenster umfaßt ein feststehendes Bauteil, an dem ein antreibbares Zahnrad, das dort als Ritzel bezeichnet ist, drehbar gelagert ist, und ein bewegliches Bauteil, an dem eine Zahnstange vorgesehen ist, in die das Zahnrad eingreift. Die Zahnstange ist als Zahnkurve ausgebildet. Das Zahnrad ist durch einen Motor, insbesondere einen Getriebemotor, antreibbar.

Bei vorbekannten Antrieben der eingangs genannten Art, die in Endlagen oder Zwischenlagen permanent Haltekräfte aufbringen müssen oder die in gewissen Abschnitten erhöhte Leistungen übertragen müssen, wurde bisher das gesamte Antriebssystems auf die maximale Last ausgelegt. Dies bedeutet, daß der Zahntrieb an bestimmten Stellen unter Lastgesichtspunkten überdimensioniert ist, was mit Kostennachteilen verbunden ist.

Aufgabe der Erfindung ist es, einen verbesserten Antrieb der eingangs angegebenen Art vorzuschlagen.

Erfindungsgemäß wird diese Aufgabe durch die kennzeichnenden Merkmale des Anspruchs 1 gelöst. Ein Teilbereich des Zahnrades und/oder der Zahnstange weist eine Verstärkung auf. Es ist möglich, daß nur ein Zahn verstärkt ist. In vielen Fällen ist es allerdings vorteilhaft wenn zwei oder mehr Zähne eine Verstärkung aufweisen. Ferner ist es möglich, daß mehr als ein Teilbereich des Zahnrades und/oder der Zahnstange eine Verstärkung aufweist.

Gemäß der Erfindung weist nur ein Teilbereich der Verzahnung, der einer besonderen Belastung ausgesetzt ist, eine Verstärkung auf. In demjenigen Teilbereich oder in denjenigen Teilbereichen, die einer erhöhten Belastung ausgesetzt sind, wird eine Verstärkung verwendet. Die Verstärkung kann aus einem höher belastbaren, im allgemeinen teureren Material bestehen. Der verstärkte Teilbereich kann eine Teilstrecke einer Zahnstange sein bzw. ein Einzelsegment einer Zahnkette bzw. ein Winkelsegment eines Zahnrades oder eines Kettenrades.

Vorteilhafte Weiterbildungen der Erfindung sind in den Unteransprüchen beschrieben.

Die Zahnstange kann als Zahnkurve ausgebildet sein.

Vorteilhaft ist es, wenn die Verstärkung als Einsatz ausgebildet ist. Bei dem Einsatz kann es sich um einen sogenannten Einleger handeln. Es ist allerdings auch möglich, ein sonstwie spielfrei befestigtes Teil zu verwenden.

Stattdessen oder zusätzlich kann die Verstärkung durch eine Beimischung in das Material des Zahnrades und/der Zahnstange gebildet sein.

Vorteilhaft ist es, wenn das Zahnrad und/oder die Zahnstange aus Kunststoff ist.

Die Verstärkung kann ebenfalls aus Kunststoff sein. In bestimmten Fällen ist es vorteilhaft, wenn die Verstärkung aus einem faserverstärktem Material, insbesondere aus einem faserverstärkten Kunststoff ist. Die Verstärkung kann ferner aus Metall hergestellt sein.

Vorteilhaft ist es, wenn das Zahnrad und/oder die Zahnstange aus Kunststoff hergestellt ist und wenn die Verstärkung teilweise oder vollständig umspritzt ist.

Nach einer weiteren vorteilhaften Weiterbildung bildet die Oberfläche der Verstärkung einen Teil der Oberfläche der Verzahnung des Zahnrades und/oder der Zahnstange. Dies ist insbesondere dann vorteilhaft oder erforderlich, wenn die Flächenpressung zwischen dem Zahnrad und der Zahnstange die kritische Belastungsgröße ist. Durch die Verwendung einer Verstärkung, die einen Teil der Oberfläche der Verzahnung des Zahnrades und/oder der Zahnstange bildet, kann die zulässige Flächenpressung erhöht werden. Dadurch kann insbesondere erreicht werden, daß bei der Verwendung von Kunststoffen die Gefahr des Kriechens verringert und das Relaxationsverhalten verbessert wird.

Es kann allerdings auch vorteilhaft sein, wenn die Oberfläche der Verstärkung keinen Teil der Oberfläche der Verzahnung des Zahnrades und/oder der Zahnstange bildet. Dann bleibt die Materialpaarung Zahnrad-Zahnstange auch im Bereich der Verstärkung erhalten. In diesem Fall, in dem sich die Verstärkung im Inneren der Verzahnung des Zahnrades und/oder der Zahnstange befindet, können erhöhte Kräfte im Inneren der jeweiligen Verzahnung aufgenommen werden, insbesondere im Zahnfußbereich. Diese Lösung ist demnach insbesondere dann von Vorteil, wenn die Zahnfußspannung die kritische Belastungsgröße darstellt. Die im Inneren der jeweiligen Verzahnung auftretenden Kräfte können durch eine flächenhafte Ausgestaltung der Verstärkung im Inneren der jeweiligen Verzahnung auf das umgebende Material übertragen werden. Dadurch, daß die innere Oberfläche der Verstärkung hinreichend groß ausgebildet wird, kann die dadurch ausgeübte Flächenpressung auf das umgebende Material verringert werden. Bei Kunststoffen kann dadurch die Gefahr des Kriechens vermindert werden. Ferner kann das Relaxationsverhalten verbessert werden.

Vorteilhaft ist es, wenn die Verstärkung an dem einer höheren Belastung ausgesetzten Bereich des Zahnrades und/oder der Zahnstange vorgesehen ist.

Die Erfindung betrifft ferner ein Schiebefenster, eine Schiebetüre oder ein bewegliches Fenster für ein Fahrzeug, insbesondere ein Kraftfahrzeug, mit einem feststehenden Bauteil, an dem ein antreibbares Zahnrad drehbar gelagert ist, und mit einem beweglichen Bauteil, an dem eine Zahnstange vorgesehen ist, in die das Zahnrad eingreift. Erfindungsgemäß weist ein Teilbereich des Zahnrades und/oder der Zahnstange eine Verstärkung auf. Vorteilhaft ist es, wenn eine oder mehrere der bereits beschriebenen vorteilhaften Weiterbildungen des Antriebes vorhanden sind.

Die Zahnstange kann als Zahnkurve ausgebildet sein.

Vorteilhaft ist es, wenn das bewegliche Bauteil mit dem feststehenden Bauteil in der Schließposition des Schiebefensters im wesentlichen fluchtet. Hierdurch wird ein besonders ansprechendes Aussehen erzielt.

Vorzugsweise ist das Zahnrad durch einen Motor, insbesondere einen Elektromotor, antreibbar. Vorteilhaft ist es, wenn der Motor ein Getriebemotor ist. Das Zahnrad kann unmittelbar durch den Motor antreibbar sein. Es kann allerdings auch indirekt durch den Motor antreibbar sein, beispielsweise über eine Welle, eine Flexwelle, einen Riementrieb, einen Kettentrieb oder einen Seilzug oder Ähnliches.

Nach einer weiteren vorteilhaften Weiterbildung weist das feststehende Bauteil eine oder mehrere Führungsschienen auf.

In der oder den Führungsschienen können Führungsnuten oder andere Führungselemente oder Führungsbahnen für an dem beweglichen Bauteil vorhandene Bolzen oder andere Führungselemente vorgesehen sein. Vorzugsweise sind die Bolzen oder sonstigen Führungselemente demontierbar.

Nach einer weiteren vorteilhaften Weiterbildung verlaufen die Führungsnuten parallel zueinander. Insbesondere fluchten die Führungsnuten miteinander.

Vorteilhaft ist es, wenn die Führungsschienen als Strangpressprofil hergestellt sind. Dies ist insbesondere dann vorteilhaft, wenn die Führungsnuten miteinander fluchten. Bei bestimmten Größenverhältnissen des beweglichen Bauteils kann die Führungsschiene derart ausgeführt sein, daß die Führungsnuten miteinander fluchten. In diesem Fall ist die Führungsschiene vorteilhaft als Strangpressprofil herstellbar, was insbesondere bei kleinen Stückzahlen kostensparend ist.

In bestimmten Fällen kann es vorteilhaft sein, die Führungsschienen als Hybridbauteile in Schalenbauweise herzustellen.

Vorteilhaft ist es, wenn das antreibbare Zahnrad in der Führungsschiene drehbar gelagert ist.

Nach einer weiteren vorteilhaften Weiterbildung ist die Zahnstange bzw. Zahnkurve in die Umspritzung, insbesondere Kunststoff-Umspritzung, des beweglichen Bauteils integriert. Die Zahnstange bzw. Zahnkurve kann in die Umspritzung des beweglichen Bauteils eingelegt sein, also als Einlegeteil ausgestaltet sein. Es ist allerdings auch möglich, die Zahnstange bzw. Zahnkurve direkt einzuspritzen. Bei dieser Lösung ist die Umspritzung einschließlich der Zahnstange bzw. Zahnkurve in einem Teil gespritzt. Die Umspritzung kann als Einkomponenten-Spritzguß oder als Zweikomponenten-Spritzguß ausgeführt sein.

Eine weitere vorteilhafte Weiterbildung ist dadurch gekennzeichnet, daß die Zahnstange bzw. Zahnkurve einen Abschnitt für die Bewegung des beweglichen Bauteils längs dem feststehenden Bauteil aufweist. Diese Bewegung kann in einer zum feststehenden Bauteil im wesentlichen parallelen Ebene stattfinden, vorzugsweise auf der Innenseite des feststehenden Bauteils.

Nach einer weiteren vorteilhaften Weiterbildung weist die Zahnstange bzw. Zahnkurve einen Abschnitt für die Bewegung des beweglichen Bauteils in die Schließposition auf. Vorzugsweise führt diese Bewegung aus der Ebene, die im wesentlichen parallel zum feststehenden Bauteil verläuft, heraus. Sie führt das bewegliche Bauteil vorzugsweise in eine Ebene, die im wesentlichen parallel zum feststehenden Bauteil verläuft. Der erwähnte Abschnitt der Zahnstange bzw. Zahnkurve dient auch für die umgekehrte Bewegung, also für die Bewegung aus der Schließposition in die geöffnete Position.

Vorteilhaft ist es, wenn der Abschnitt für die Bewegung des beweglichen Bauteils in die Schließposition eine Verstärkung aufweist. In diesem Fall wird der Teilbereich der Zahnstange, der eine Verstärkung aufweist, von dem Abschnitt für die Bewegung des beweglichen Bauteils in die Schließposition gebildet.

Nach einer weiteren vorteilhaften Weiterbildung ist ein Einklemmschutz vorgesehen. Der Einklemmschutz kann durch eine Motorsteuerung erfolgen, beispielsweise durch eine Änderung der Stromaufnahme des Elektromotors an bestimmten Wegsegmenten, die durch einen Sensor, insbesondere einen Hallsensor, bestimmt werden. Stattdessen oder zusätzlich kann der Einklemmschutz durch kontaktierende Dichtungen erfolgen, die bei Berührung mit einem Hindernis, beispielsweise einem eingeklemmten Finger oder einer eingeklemmten Hand, den Motor ausschalten oder in der Laufrichtung umschalten. Der Einklemmschutz ist ferner stattdessen oder zusätzlich durch einen optischen Sensor in Kombination mit der Motorsteuerung realisierbar.

Vorteilhaft ist es, wenn der Motor bzw. Getriebemotor eine Selbsthemmung aufweist. Der Motor bzw. Getriebemotor kann über mechanische Elemente mit dem beweglichen Bauteil verbunden sein. An dieser Stelle kann eine Selbsthemmung realisiert werden. Durch die Selbsthemmung im Motor bzw. Getriebemotor oder den mechanischen Elementen, mit denen der Motor bzw. Getriebemotor mit dem beweglichen Bauteil verbunden ist, kann erreicht werden, daß das bewegliche Bauteil auch bei Betriebseinflüssen, insbesondere im Fahrbetrieb, in jeder Position zuverlässig festgehalten wird.

Die Erfindung betrifft ferner ein Fahrzeug, insbesondere ein Kraftfahrzeug, mit einem erfindungsgemäßen Schiebefenster, einer erfindungsgemäßen Schiebetüre und/oder einem erfindungsgemäßen beweglichen Fenster. Vorteilhaft ist es, wenn das feststehende Bauteil mit dem es umgebenden Fahrzeugteil im wesentlichen fluchtet. Das Schiebefenster bzw. die Schiebetür bzw. das bewegliche Fenster ist also außenflächenbündig in das Fahrzeugteil eingesetzt, beispielsweise in eine Fahrzeugtür, eine Fahrzeugklappe oder ein Karosserieteil. Dies ist insbesondere dann von Vorteil, wenn das bewegliche Bauteil mit dem feststehenden Bauteil in der Schließposition des Schiebefensters bzw. der Schiebetüre bzw. des beweglichen Fensters fluchtet. In diesem Fall erscheinen das bewegliche Bauteil, das feststehende Bauteil und das umgebende Fahrzeugteil als eine einzige, fluchtende Fläche, was ein besonders ansprechendes Erscheinungsbild bewirkt.

Ausführungsbeispiele der Erfindung werden nachstehend anhand der beigefügten Zeichnung im einzelnen erläutert. In der Zeichnung zeigt
- Fig. 1: einen Teil einer Führungsschiene, ein Zahnrad und einen Teil einer Zahnkurve in einer perspektivischen Explosionsdarstellung,
- Fig. 2: einen anderen Teil der Führungsschiene und der Zahnkurve in einer perspektivischen Explosionsdarstellung,
- Fig. 3: das Zahnrad und die Zahnkurve gemäß Fig. 1 in einer Draufsicht,
- Fig. 4: eine Abwandlung der Zahnkurve in einer der Fig. 3 entsprechenden Darstellung und
- Fig. 5: eine weitere Abwandlung der Zahnkurve.

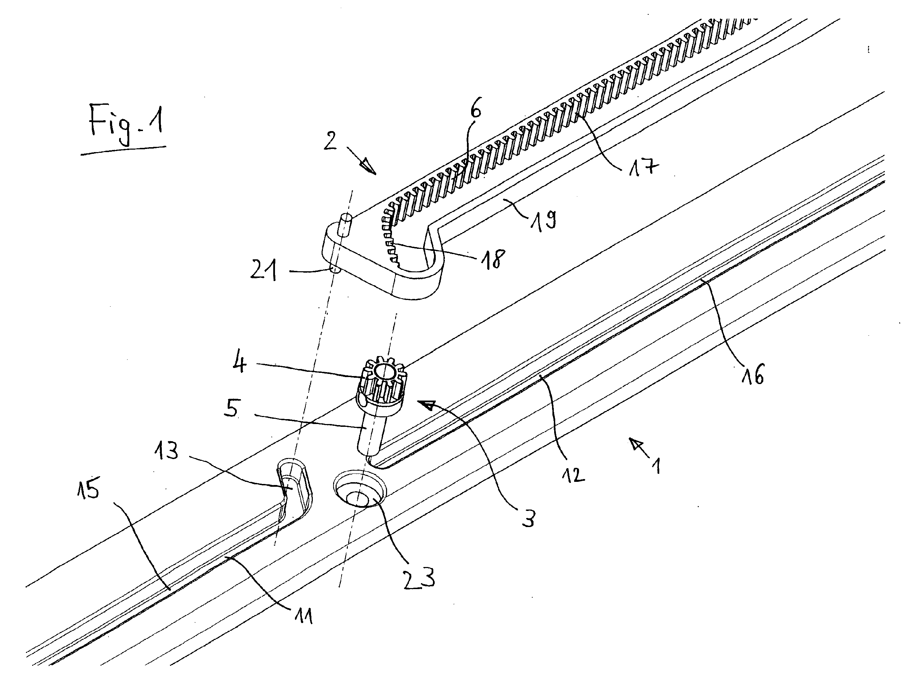

In Fig. 1 ist der mittlere Teilbereich einer Führungschiene 1 gezeigt, die an einem feststehenden Bauteil, nämlich einem feststehenden Fenster, eines Kraftfahrzeugs befestigt ist. Die Führungsschiene 1 ist als Strangpreßprofil mit Einsätzen hergestellt. Sie weist eine erste Führungsnut 11 und eine zweite Führungsnut 12 auf, die jeweils in Längsrichtung der Führungsschiene 1 verlaufen und die miteinander fluchten. Das rechte Ende der ersten Führungsnut 11 und das linke Ende der zweiten Führungsnut 12 sind voneinander beabstandet. In dem Bereich dieses Abstands ist in der Führungsschiene 1 zwischen den Führungsnuten 11, 12 eine Vertiefung 23 vorgesehen, in der ein Zahnrad 3 drehbar gelagert ist. Das Zahnrad 3 umfaßt einen umlaufenden Zahnkranz 4, der in der montierten Stellung aus der Vertiefung 23 nach oben herausragt, und einen Bolzen 5, der in der Vertiefung 23 drehbar gelagert ist. Der Bolzen 5 ist ferner durch einen Elektromotor (in der Zeichnung nicht dargestellt) antreibbar. Der Elektromotor kann an der Führungsschiene 1 oder einem anderen Teil des feststehenden Bauteils oder einem anderen Teil des Fahrzeugs befestigt sein.

An dem beweglichen Bauteil, das als bewegliches Fenster ausgebildet ist (in der Zeichnung nicht dargestellt), ist eine Zahnstange befestigt, die als Zahnkurve 2 ausgebildet ist und die eine Verzahnung 6 und zwei Führungsbolzen 21, 22 aufweist. Die Zahnkurve 2 kann in die Umspritzung des beweglichen Bauteils integriert sein. Der erste Führungsbolzen 21 greift in die erste Führungsnut 11 ein, der zweite Führungsbolzen 22 greift in die zweite Führungsnut 12 ein. Ferner greift im montierten Zustand der Zahnkranz 4 des Zahnrads 3 in die Verzahnung 6 der Zahnkurve 2 ein. Die Bolzen 21, 22 sind demontierbar. Die Zähne der Verzahnung 6 der Zahnkurve 2 weisen in horizontale Richtung. Die Rotationsachse des Zahnkranzes 4 des Zahnrads 3 verläuft in vertikaler Richtung.

Die Führungsnuten 11, 12 weisen jeweils einen ersten Abschnitt 15, 16 und einen zweiten Abschnitt 13, 14 auf. Die ersten Abschnitte 15, 16 sind geradlinig ausgebildet. Sie verlaufen in Längsrichtung der Führungsschiene 1. Die zweiten Abschnitte 13, 14 verlaufen in einem Winkel von etwa 45° zu den ersten Abschnitten 15, 16. Duch die ersten Abschnitte 15, 16 wird die Zahnkurve 2 und mit ihr das bewegliche Bauteil längs dem feststehenden Bauteil bewegt. Diese Bewegung findet in einer Ebene statt, die mit derjenigen des feststehenden Bauteils im wesentlichen parallel verläuft und die auf der Innenseite des feststehenden Bauteils liegt.

Die zweiten Abschnitte 13, 14 dienen dazu, die Zahnkurve 2 und mit ihr das bewegliche Bauteil aus dieser Ebene heraus in die Schließposition zu führen, in der die Außenfläche des beweglichen Bauteils mit der Außenfläche des feststehenden Bauteils im wesentlichen fluchtet.

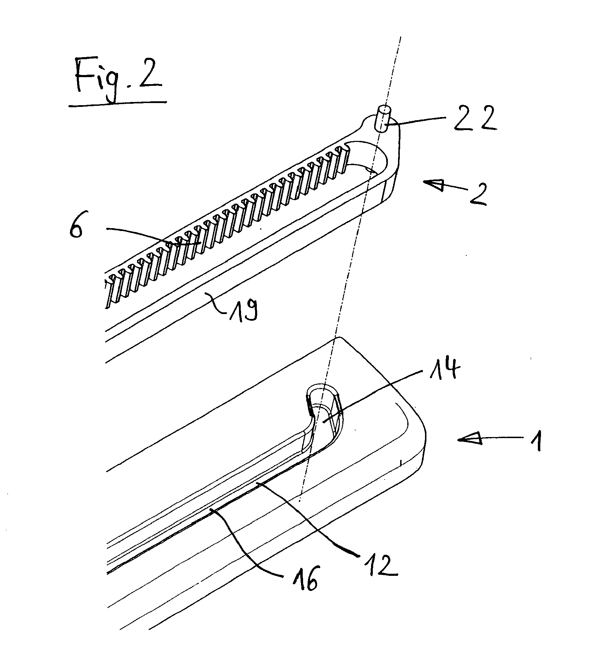

In entsprechender Weise weist die Verzahnung 6 der Zahnkurve 2 einen Abschnitt 17 auf, der in Längsrichtung der Führungsschiene 1 verläuft, und einen Abschnitt 18, der in einem Winkel von etwa 45° hierzu verläuft. Die Verzahnung 6 ist eine Geradverzahnung. Sie kann auch als Schrägverzahnung ausgebildet sein, was einen höheren Herstellungsaufwand mit sich bringt, wodurch aber die Laufruhe gesteigert, die Geräuschbildung während des Betriebs verringert und die mechanische Belastung herabgesetzt und damit die Lebensdauer erhöht werden können. Im Ausführungsbeispiel nach Fig. 1, 2 und 3 ist die Zahnkurve 2 durch einen umlaufenden Steg 19 geschlossen. Der umlaufende Steg 19 verläuft parallel zur Verzahnung 6 der Zahnkurve 2 und im Abstand hierzu, wobei der Abstand im wesentlichen dem Durchmesser des Zahnkranzes 4 des Zahnrads 3 entspricht.

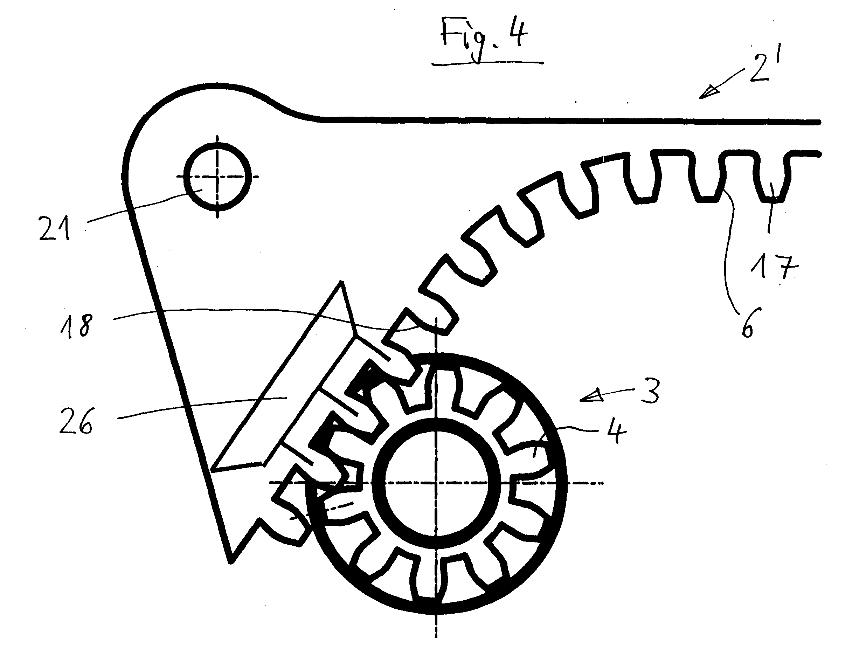

In Fig. 4 ist eine abgewandelte Ausführungsform dargestellt, in der die Zahnkurve 2' offen ausgebildet ist. Hier fehlt der umlaufende Steg 19.

Der Abschnitt 17 der Verzahnung 6 dient für die Bewegung des beweglichen Bauteils längs dem feststehenden Bauteil. Der Abschnitt 18 der Verzahnung 6 dient für die Bewegung des beweglichen Bauteils in die Schließposition.

Der Elektromotor, der als Getriebemotor ausgestaltet ist, kann das Zahnrad 3 direkt antreiben. Er kann das Zahnrad 3 allerdings auch indirekt antreiben, beispielsweise über eine flexible Welle, ein festes oder flexibles Gewindeelement oder eine Zahnstange oder einen Zahnriemen. Der Bewegungsablauf des beweglichen Bauteils wird durch die Führungsnuten 11, 12 in der Führungschiene 1, in denen die Führungsbolzen 21, 22 gleiten, vorgegeben.

Dadurch, daß das bewegliche Bauteil in der beschriebenen Weise antreibbar ist, können viele Bauteile entfallen, die bei einer manuellen Betätigung des beweglichen Bauteils erforderlich sind. Ferner kann der weitere Vorteil erreicht werden, daß weniger Bauraum im Sichtbereich benötigt wird und keine Abdeckungen für den Griffmechanismus erforderlich sind, was der Wertanmutung des Schiebefensters zugute kommt. Ein weiterer Vorteil besteht darin, daß höhere Schließkräfte als bei komfortabler manueller Betätigung erzielbar sind. Hierdurch kann die Dichtigkeit des Schiebefensters erhöht werden, insbesondere bei "Flush-Schiebefenstern", bei denen das bewegliche Bauteil in der Schließposition mit dem feststehenden Bauteil fluchtet. Ein weiterer erzielbarer Vorteil besteht in der Komfortsteigerung durch einfache Tastenbedienung des Fensters, gegebenenfalls von verschiedenen Position aus dem Fahrzeug und auch durch eine mögliche Fernbedienung, insbesondere eine Funkfernbedienung oder eine Infrarotfernbedienung.

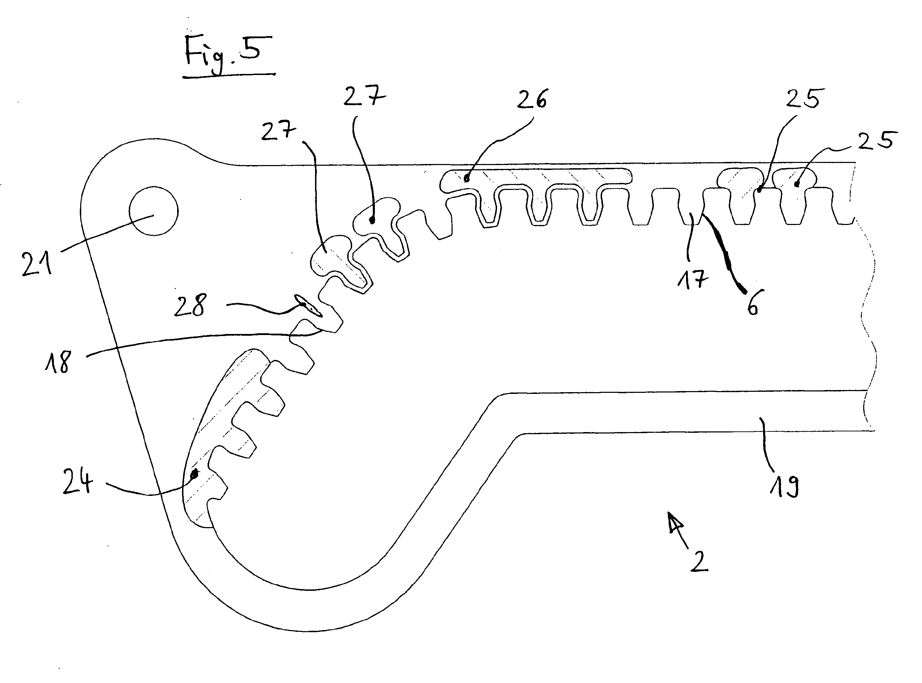

Fig. 5 zeigt die in Fig. 1, 2 und 3 dargestellte Zahnkurve 2 mit verschiedenen Verstärkungen 24, 25, 26, 27, 28. Die Verzahnung 6 ist im Abschnitt 18, der für die Bewegung des beweglichen Bauteils in die Schließposition dient, besonders belastet. Dementsprechend soll dieser Abschnitt 18 verstärkt werden. In Fig. 5 sind aus Gründen der vereinfachten zeichnerischen Darstellung verschiedene Verstärkungen dargestellt, die sich teilweise auch in einem nicht besonders belasteten Bereich befinden. Diese Darstellung dient dazu, die verschiedenen Formen der Verstärkungen zu demonstrieren, unabhängig von der Lage innerhalb der Verzahnung 6. Ferner wird in der Praxis meistens lediglich eine der in Fig. 5 gezeigten Verzahnungen verwendet.

Bei der Verstärkung 24 handelt es sich um einen Einsatz aus Kunststoff oder Metall, der mindestens zwei oder mehr Zähne und einen die Zähne verbindenden Bereich umfaßt. Die Oberflächen der Zähne der Verstärkung 24 bilden einen Teil der Oberfläche der Verzahnung 6 der Zahnkurve 2. Dementsprechend ist der Werkstoff der Verstärkung 24 auch Reib- und Gleitpartner des antreibenden Zahnkranzes 4. Der Werkstoff der Verstärkung 24 kann an die höhere Belastung angepaßt werden.

Die abgewandelten Verstärkungen 25 entsprechen im Material der Verstärkung 24. Im Unterschied zur Verstärkung 24 werden bei den Verstärkungen 25 Einzelzähne verwendet. Es können, wie im dargestellten Fall, zwei Zähne 25 verwendet werden. Es ist allerdings auch möglich, nur einen oder mehr als zwei Zähne 25 vorzusehen.

Bei der Verstärkung 26 handelt es sich um einen komplett umspritzten Einsatz. In diesem Fall ist das Material der Zahnkurve 2 Kunststoff. Der Einsatz 26 kann aus einem geeigneten Kunststoff oder Metall bestehen. Die Verstärkung 26 bildet keinen Teil der Oberfläche der Verzahnung 6 der Zahnkurve 2. Die Materialpaarung Zahnkranz 4 - Verzahnung 6 ist also auch im Bereich der Verstärkung 26 dieselbe wie im übrigen Bereich. Es kommt dementsprechend im Bereich der Verstärkung 26 nicht zu Materialübergängen verschiedener Werkstoffe, insbesondere nicht zu einem Materialübergang von einem harten zu einem weichen Werkstoff. Infolgedessen findet in diesem Bereich auch keine Geräuschänderung statt. Durch die Verstärkung 26 wird die Zahnfußfestigkeit erhöht, allerdings weniger stark als bei den Verstärkungen 24 und 25. Ein weiterer Vorteil der Verstärkung 26 besteht darin, daß der zugehörige Einleger einfach ausgestaltet sein kann. Insbesondere kann der Einleger, der die Verstärkung 26 bildet, größere Toleranzen aufweisen. Er muß ferner nicht die Zahnform der Verzahnung 6 enthalten. Dies bietet einen Fertigungs- und Kostenvorteil.

Die Verstärkungen 27 entsprechend denjenigen der Verstärkung 26. Im Unterschied zur Verstärkung 26 werden bei der Verstärkung 27 allerdings einzelne Zähne verwendet. Es können, wie zeichnerisch dargestellt, zwei Zähne 27 vorgesehen sein. Es ist allerdings auch möglich, einen Zahn oder mehr als zwei Zähne 27 vorzusehen.

Die Verstärkung 28 wird durch einen Blechabschnitt gebildet, der in einen Zahn der Verzahnung 6 eingesetzt ist. Es ist allerdings auch möglich, einen Blechabschnitt 28 in mehr als einen Zahn einzusetzen. Die Verwendung eines Blechabschnitts 28 bietet weitere Kostenvorteile durch die einfache Anfertigung des Bauteils. Bei der Herstellung der Verstärkung 28 muß allerdings mit einem Zuführautomaten gearbeitet werden.

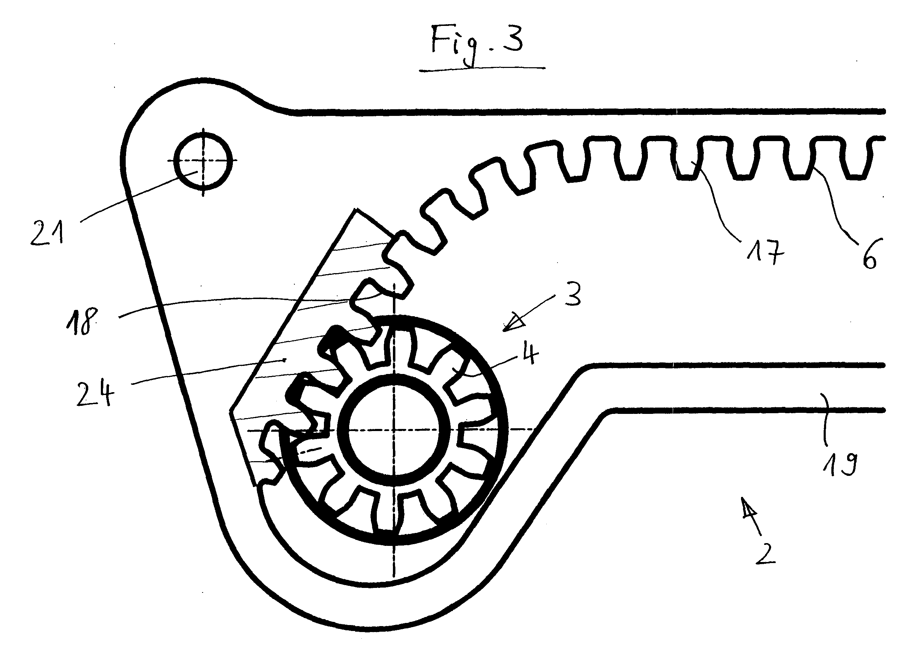

In Fig. 3 ist im Abschnitt 18 eine Verstärkung 24 eingesetzt, die im wesentlichen der Verstärkung 24 in Fig. 5 entspricht.

Bei der Ausführungsform nach Fig. 4 ist im Abschnitt 18 der Verzahnung 6 eine Verstärkung 26 eingesetzt, die im wesentlichen der Verstärkung 26 in Fig. 5 entspricht.

Bei dem in den Ausführungsbeispielen gezeigten und erläuterten elektrischen Schiebefenster treten verschiedene Belastungen beim Betrieb des Fensters auf. Die höchsten Belastungen treten im geschlossenen Zustand des Schiebefensters auf. Hierbei wird die Verzahnung des Antriebes durch den Dichtungsgegendruck sowie durch von außen auftretende Kräfte beaufschlagt. Durch die geometrische Anordnung der Zahnkurve 2, 2', die einen Kraftangriff unter einem Winkel von etwa 45° mit sich bringt, verringert sich die resultierende Kraft auf die Verzahnung. Die verbleibende Krafteinwirkung muß durch die Verzahnung aufgenommen werden. Hierbei soll eine Verstärkung zum Einsatz kommen. Die durch die Verstärkung bewirkte Verzahnung kann als Hybridverzahnung bezeichnet werden. Kritisch ist bei der Verzahnung die zulässige Zahnfußspannung. Diese wird beeinflußt durch den Werkstoff, die Geometrie, insbesondere die Zahngeometrie, und die Belastungsrichtung.

Durch die Erfindung werden die auftretenden Kräfte großflächig in das Bauteil, also in das Zahnrad und/oder die Zahnstange, übertragen, um die zulässige Flächenpressung (Spannung) auf einem geringem Niveau zu halten. Die Erfindung ist für Kraftübertragungen aller Art verwendbar, insbesondere für Antriebe für Schiebefenster, Schiebetüren, insbesondere elektrische Schiebetüren, und Fensterheber, insbesondere Racklift-Fensterheber.

Durch die Verwendung der erfindungsgemäßen Verstärkungen können die Standzeiten erhöht werden. Ferner können die besseren Materialeigenschaften der Verstärkung in Teilbereichen des Antriebs genutzt werden. Hier kann insbesondere die höhere zulässige Spannung der Verstärkung genutzt werden. Ferner ist es möglich, die Temperaturfestigkeit zu erhöhen. Möglich ist eine Erhöhung der Standzeiten über der Zeit und der Temperatur.

Ferner kann eine Geräuschminimierung durch Nutzung reibungsoptimierter Werkstoffe im Bereich der geringen Belastung erreicht werden. In vielen Fällen ist ein weit überwiegender Bereich geringer Belastung vorhanden, beispielsweise 95% des gesamten Verfahrweges. Durch die Nutzung von Standard-Werkstoffen, insbesondere Standard-Kunststoffen, im gering belasteten Bereich können die Kosten gesenkt werden. Der hochbelastete Bereich, der eine Verstärkung und mit dieser hochwertige Materialien benötigt, beträgt nur einen geringen Anteil des Bauteilvolumens von beispielsweise 3% bis 5%.

Vorteilhaft ist ferner, daß das technische Spritzgußverfahren genutzt werden kann, das Kostenvorteile gegenüber anderen Verfahren mit sich bringt, insbesondere gegenüber Fräsverfahren. Der Fertigungsprozeß kann verbessert werden, da nur ein verhältnismäßig kleiner Einleger aus einem teureren Material hergestellt werden muß. Ferner lassen sich Gewichtsvorteile erreichen. Für den Bereich geringer Belastung kann ein Kunststoff mit einer Dichte von beispielsweise 1,5 g/cm³ verwendet werden. Lediglich im hochbelasteten Bereich befindet sich ein schwererer Werkstoff, beispielsweise ein Metall mit einer Dichte von beispielsweise 7,8 g/cm³.

Bei dem erläuterten Schiebefenster treten in Bereichen, in denen höhere Kräfte entstehen, insbesondere bei einem Schließvorgang zur Erreichung der notwendigen Dichtungsverpressungen, aber auch bei dem Öffnungsvorgang, sowohl kurzzeitig als auch längerfristig höhere Kräfte zwischen den am Antrieb beteiligten Funktionselementen auf, also zwischen dem Zahnrad und der Zahnstange. Diese Kräfte können die Funktionselemente negativ beeinflussen oder zerstören. In diesen kritischen Bereichen wird erfindungsgemäß eine Verstärkung verwendet, die durch eine höherfeste Komponente gebildet werden kann und die die beschriebenen Belastungen auch auf Dauer funktionell verarbeiten kann. Im Bereich höchster Beanspruchung kann die Zahnfußspannung in der Größenordnung von 20 N/mm² liegen.

Die Verstärkung kann in Form eines Einlegers, einer Einspritzung oder eines sonstwie spielfrei befestigten Teils, das mit dem restlichen, größeren Teil aus nicht hochbelastbarem Material verbunden ist, ausgestaltet sein. Die Verstärkung kann auch durch Beimischung eines festeren Materials, gegebenenfalls unter gradueller Veränderung der Materialeigenschaften, bei der Herstellung vorzugsweise stufenlos in das weniger belastbare Material integriert werden. Für die Herstellung kann eine Großform aus preiswertem Kunststoff verwendet werden, in die kleine Teile aus Stahl oder PEEK eingebracht werden. Dadurch sind billige Herstellungsverfahren möglich. Die Oberfläche des Zahnrades und/oder der Zahnstange kann bei dem gering belasteten Teilstück ungenau und/oder rauh sein. Bei dem stark belasteten Teil, in dem sich die Verstärkung befindet, kann ein verbesserte Oberfläche verwendet werden, beispielsweise eine polierte Oberfläche oder eine Oberfläche, die auf andere Weise vorteilhaft strukturiert ist. Zur Geräuschminderung kann das gering belastete Teilstück aus einem besonders weich abrollenden, leisen Material gefertigt werden.

## Patentansprüche

1. Antrieb für ein Schiebefenster, eine Schiebetür oder einen Fensterheber für ein Fahrzeug, insbesondere für ein Kraftfahrzeug,
mit einem Zahnrad (3) und mit einer Zahnstange (2, 2'),
**dadurch gekennzeichnet,**
**daß** ein Teilbereich des Zahnrades (3) und/oder der Zahnstange (2, 2') eine Verstärkung (24, 25, 26, 27, 28) aufweist.

2. Antrieb nach Anspruch 1, **dadurch gekennzeichnet, daß** die Zahnstange als Zahnkurve (2, 2') ausgebildet ist.

3. Antrieb nach Anspruch 1 oder 2, **dadurch gekennzeichnet, daß** die Verstärkung als Einsatz ausgebildet ist.

4. Antrieb nach einem der vorhergehenden Ansprüche, **dadurch gekennzeichnet, daß** die Verstärkung durch eine Beimischung in das Material des Zahnrades (3) und/oder der Zahnstange (2, 2') gebildet ist.

5. Antrieb nach einem der vorhergehenden Ansprüche, **dadurch gekennzeichnet, daß** das Zahnrad (3) und/oder die Zahnstange (2, 2') aus Kunststoff ist.

6. Antrieb nach einem der vorhergehenden Ansprüche, **dadurch gekennzeichnet, daß** die Verstärkung aus Kunststoff, aus einem faserverstärkten Material, insbesondere aus einem faserverstärkten Kunststoff, oder aus Metall ist.

7. Antrieb nach Anspruch 5 oder 6, **dadurch gekennzeichnet, daß** die Verstärkung teilweise oder vollständig umspritzt ist.

8. Antrieb nach einem der vorhergehenden Ansprüche, **dadurch gekennzeichnet, daß** die Oberfläche der Verstärkung (24, 25) einen Teil der Oberfläche der Verzahnung (6) des Zahnrades (3) und/oder der Zahnstange (2, 2') bildet.

9. Antrieb nach einem der vorhergehenden Ansprüche, **dadurch gekennzeichnet, daß** die Verstärkung an dem einer höheren Belastung ausgesetzten Bereich des Zahnrades (3) und/oder der Zahnstange (2, 2') vorgesehen ist.

10. Schiebefenster, Schiebetüre oder bewegliches Fenster für ein Fahrzeug, insbesondere ein Kraftfahrzeug, mit einem feststehenden Bauteil, an dem ein antreibbares Zahnrad (3) drehbar gelagert ist, und mit einem beweglichen Bauteil, an dem eine Zahnstange (2, 2') vorgesehen ist, in die das Zahnrad (3) eingreift,
**dadurch gekennzeichnet,**
**daß** ein Teilbereich des Zahnrades (3) und/oder der Zahnstange (2, 2') eine Verstärkung (24, 25, 26, 27, 28) aufweist.

11. Schiebefenster, Schiebetüre oder bewegliches Fenster nach Anspruch 10, **gekennzeichnet durch** eines oder mehrere Merkmale nach einem oder mehreren der Ansprüche 2 bis 10.

12. Schiebefenster, Schiebetüre oder bewegliches Fenster nach Anspruch 10 oder 11, **dadurch gekennzeichnet, daß** das bewegliche Bauteil mit dem feststehenden Bauteil in der Schließposition des Schiebefensters im wesentlichen fluchtet.

13. Schiebefenster, Schiebetüre oder bewegliches Fenster nach einem der Ansprüche 10 bis 12, **dadurch gekennzeichnet, daß** das Zahnrad (3) durch einen Motor, insbesondere einen Getriebemotor, antreibbar ist.

14. Schiebefenster, Schiebetüre oder bewegliches Fenster nach einem der Ansprüche 10 bis 13, **dadurch gekennzeichnet, daß** das feststehende Bauteil eine oder mehrere Führungsschienen (1) aufweist.

15. Schiebefenster, Schiebetüre oder bewegliches Fenster nach einem der Ansprüche 10 bis 14, **dadurch gekennzeichnet, daß** in der oder den Führungsschienen (1) Führungsnuten (11, 12) für an dem beweglichen Bauteil vorhandene Bolzen (21, 22) vorgesehen sind.

16. Schiebefenster, Schiebetüre oder bewegliches Fenster nach Anspruch 15, **dadurch gekennzeichnet, daß** die Bolzen (21, 22) demontierbar sind.

17. Schiebefenster, Schiebetüre oder bewegliches Fenster nach Anspruch 15 oder 16, **dadurch gekennzeichnet, daß** die Führungsnuten (11, 12) miteinander fluchten oder parallel zueinander verlaufen.

18. Schiebefenster, Schiebetüre oder bewegliches Fenster nach einem der Ansprüche 14 bis 17, **dadurch gekennzeichnet, daß** die Führungsschienen (1) als Strangpreßprofil hergestellt sind.

19. Schiebefenster, Schiebetüre oder bewegliches Fenster nach einem der Ansprüche 14 bis 18, **dadurch gekennzeichnet, daß** die Führungsschienen als Hybridbauteile in Schalenbauweise hergestellt sind.

20. Schiebefenster, Schiebetüre oder bewegliches Fenster nach einem der Ansprüche 14 bis 19, **dadurch gekennzeichnet, daß** das antreibbare Zahnrad (3) in der Führungsschiene (1) drehbar gelagert ist.

21. Schiebefenster, Schiebetüre oder bewegliches Fenster nach einem der Ansprüche 10 bis 20, **dadurch gekennzeichnet, daß** die Zahnstange (2, 2'), insbesondere die Zahnkurve (2, 2'), in die Umspritzung des beweglichen Bauteils integriert ist.

22. Schiebefenster, Schiebetüre oder bewegliches Fenster nach einem der Ansprüche 10 bis 21, **dadurch gekennzeichnet, daß** die Zahnstange (2, 2'), insbesondere die Zahnkurve (2, 2'), einen Abschnitt (17) für die Bewegung des beweglichen Bauteils längs dem feststehenden Bauteil aufweist.

23. Schiebefenster, Schiebetüre oder bewegliches Fenster nach einem der Ansprüche 10 bis 22, **dadurch gekennzeichnet, daß** die Zahnkurve (2, 2'), insbesondere die Zahnkurve (2, 2'), einen Abschnitt (18) für die Bewegung des beweglichen Bauteils in die Schließposition aufweist.

24. Schiebefenster, Schiebetüre oder bewegliches Fenster nach einem der Ansprüche 10 bis 23, **gekennzeichnet durch** einen Einklemmschutz.

25. Schiebefenster, Schiebetüre oder bewegliches Fenster nach einem der Ansprüche 10 bis 24, **dadurch gekennzeichnet, daß** der Motor bzw. Getriebemotor eine Selbsthemmung aufweist.

26. Fahrzeug, insbesondere Kraftfahrzeug, mit einem Schiebefenster, einer Schiebetüre und/oder einem beweglichen Fenster nach einem der Ansprüche 10 bis 25.

27. Fahrzeug nach Anspruch 26, **dadurch gekennzeichnet, daß** das feststehende Bauteil mit dem es umgebenden Fahrzeugteil im wesentlichen fluchtet.
